# EUROPEAN PATENT APPLICATION

(11) **EP 2 746 603 A1**
(43) Date of publication of application: **25.06.2014**
(21) Application number: 13192995.2
(22) Date of filing: 15.11.2013
(51) Int. Cl.: F16C 17/02, F16C 33/10, F16C 37/00

(54) **Journal bearing device**

(30) Priority: 19.12.2012 JP 2012276363
(71) Applicant: Hitachi, Ltd., Tokyo 100-8280 (JP)
(72) Inventor: Suzuki, Kenta, Tokyo, 100-8280 (JP); Hemmi, Makoto, Tokyo, 100-8280 (JP); Inoue, Tomoaki, Tokyo, 100-8280 (JP); Murata, Kenichi, Tokyo, 100-8280 (JP)
(74) Representative: MERH-IP Matias Erny Reichl Hoffmann

(57) **Abstract**

In a journal bearing device for bearing a rotary shaft of a rotary machine, including an upper bearing liner (2a), a lower bearing liner (2b) connected to a lower part of the upper bearing liner (2a), and an oil removing groove (7) provided in a sliding surface (9a, 9b) of the lower bearing liner (2b) and extending to both bearing side surfaces from a center portion in a bearing width direction, the oil removing groove (7) is provided on a downstream side in a rotary shaft-rotation-direction relative to an oil film pressure producing portion of the sliding surface (9a, 9b) of the lower bearing liner (2b), an end portion of the oil removing groove (7) in the bearing width direction is arranged on the rotation direction downstream side relative to a center portion of the groove in the bearing width direction, and the journal bearing device (2) has a sliding surface (9a, 9b) on a downstream side of the oil removing groove (7) of the lower bearing liner (2b) in the rotary shaft rotation direction.

## Description

### [Technical Field]

The present invention relates to a journal bearing device and, particularly, to a journal bearing device which supports a rotary shaft of an industrial rotary machine, in which high reliability is required, such as a generator, a steam turbine, a gas turbine, and a compressor.

### [Background Art]

As an example of a journal bearing device which supports a rotary shaft of an industrial rotary machine, in which high reliability is required, such as a generator, a steam turbine, and a gas turbine, a journal bearing device having a structure in which a sliding surface of a lower half side of the journal bearing device is partially notched has been proposed in JP-A No. 2000-145781 (Patent Literature 1).

### [Summary of Invention]

### [Technical Problem]

In a bearing that supports a load of a rotary shaft of a rotary machine, a load direction is fixed and a range in which an oil film reaction of a sliding surface is produced becomes a part of the entire sliding surface. The cause of a bearing loss is produced for a reason that lubricant oil on the sliding surface is sheared by the rotary shaft, so that it is possible to reduce the loss of the bearing by providing a groove notched at a portion in which the oil film reaction is not produced, as described in the Patent Literature 1.

Incidentally, a bearing device of an industrial rotary machine is required to obtain high reliability and, if rotary vibration is produced due to external factors such as a massive earthquake and damage of other portions of the rotary machine, the bearing device is required to support the rotary shaft by a damping effect through the oil film of the sliding surface of the bearing until the rotary vibration is stopped. If the rotary shaft centrifugally whirls, a centrifugal force is produced in addition to the own weight of the rotary shaft, so that a portion at which the oil film reaction is produced varies every moment. Therefore, in the case of a bearing device in which a sliding surface on which the oil film reaction is not produced at the time of normal operation is widely notched, there is a fear that the damping effect through the oil film may not be obtained and the vibration is increased when the whirls occur.

Therefore, an object of the present invention is to decrease a bearing loss while obtaining reliability, even in a case where rotary vibration is produced due to external factors such as a massive earthquake and damage of other portions of a rotary machine.

### [Solution to Problem]

To attain the above-mentioned object, according to the present invention, there is provided a journal bearing device for supporting a rotary shaft of a rotary machine, including an upper bearing liner, a lower bearing liner connected to a lower part of the upper bearing liner, and an oil removing groove provided in a sliding surface of the lower bearing liner and extending to both bearing side surfaces from a center portion in a bearing width direction, in which the oil removing groove is provided on a downstream side in a rotary shaft-rotation-direction of the rotary shaft relative to an oil film pressure producing portion of the sliding surface of the lower bearing liner, an end portion of the oil removing groove in the bearing width direction is arranged on the rotation direction downstream side relative to a center portion of the groove in the bearing width direction, and the journal bearing device has a sliding surface on a downstream side of the oil removing groove in the rotary shaft-rotation-direction.

### [Advantageous Effects of Invention]

According to the present invention, in the journal bearing device, it is possible to reduce the loss of the bearing while obtaining the reliability of the bearing device, even in a case where rotary vibration is produced due to external factors such as a massive earthquake and damage of other portions of the rotary machine.

### [Brief Description of Drawings]

Fig. 1 is a schematic front view of a journal bearing device according to a first embodiment of the present invention;
Fig. 2 is a schematic perspective view of a lower bearing liner of the journal bearing device shown in Fig. 1;
Fig. 3 is a schematic development view of a sliding surface of the lower bearing liner shown in Fig. 2;
Fig. 4 is an explanatory view that explains a pressure oil film on a sliding surface of a general journal bearing device;
Fig. 5 is an explanatory view that explains the flow of lubricant oil in the lower bearing liner shown in Fig. 2;
Fig. 6 is a schematic perspective view that shows an alternative of an oil removing groove;
Fig. 7 is a schematic perspective view that shows an alternative of arrangement of the oil removing groove;
Fig. 8 is a schematic perspective view of a lower bearing liner of a journal bearing device according to a second embodiment of the present invention;
Fig. 9 is an explanatory view that schematically explains an example of a steam turbine; and
Fig. 10 is an explanatory view that schematically explains an example of a gas turbine.

### [Description of Embodiments]

Embodiments of the present invention will be explained hereinafter with reference to the drawings.

### (First Embodiment)

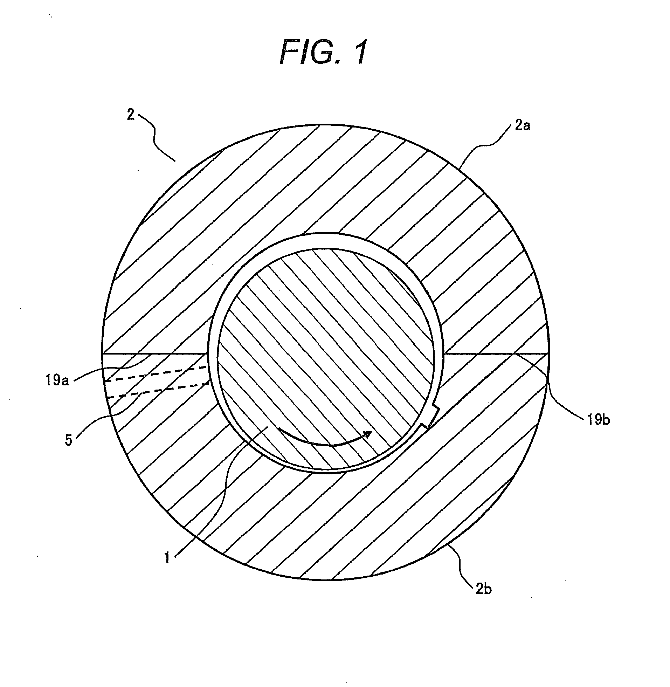

Fig. 1 is a front view that schematically shows a journal bearing device 2 according to this embodiment. The journal bearing device 2 has a two-vertically-divided structure which is composed of an upper bearing liner 2a and a lower bearing liner 2b connected to a lower part of the upper bearing liner 2a which are installed so as to interpose a rotary shaft 1 of a rotary machine.

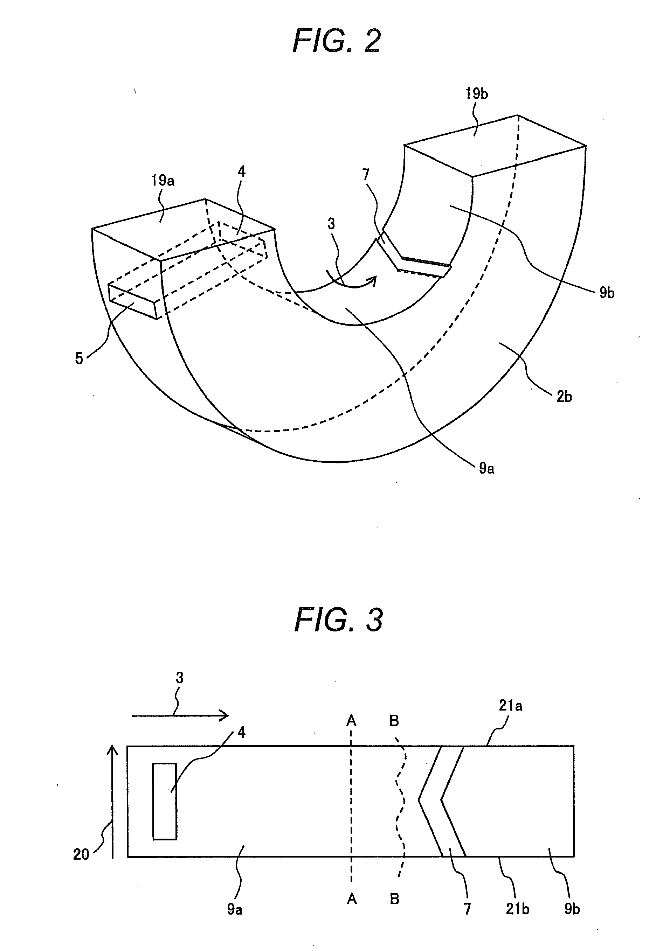

Fig. 2 is a perspective view that schematically shows the lower bearing liner 2b. Although not shown, the lower bearing liner 2b includes a bearing back metal and a liner metal provided on an inner periphery side of the bearing back metal. On the inner periphery of the lower bearing liner 2b, a sliding surface 9a on which the rotary shaft 1 slides is circumferentially formed. The sliding surface is lined with white metal or the like. An oil film of lubricant oil is formed on the sliding surface. The rotary shaft 1 rotatingly slides on the oil film. Incidentally, a rotation direction of the rotary shaft 1 is indicated by an arrow 3. For explanatory convenience, one of peripheral end portions of the lower bearing liner 2b which is indicated by a reference sign 19a shall be hereinafter referred to as a rotary shaft-rotation-direction upstream side (hereinafter, simply referred to as an upstream side) end portion, and the other of the peripheral end portions which is indicated by a reference sign 19b shall be hereinafter referred to as a rotary shaft-rotation-direction downstream side (hereinafter, simply referred to as a downstream side) end portion.

In the vicinity of the upstream side end portion 19a of the lower bearing liner 2b, an oil supply pathway 5 for inducing the lubricant oil onto the sliding surface of the bearing from an exterior of the bearing is provided. The oil supply pathway 5 extends to an inner peripheral surface side of the bearing from an outer peripheral surface of the lower bearing liner 2b and is connected to an oil supply hole 4 which is opened in the sliding surface 9a in the vicinity of the rotary shaft-rotation-direction upstream side end portion 19a. The lubricant oil supplied from the exterior of the bearing flows down the oil supply pathway 5 and is supplied onto the sliding surface from the oil supply hole 4.

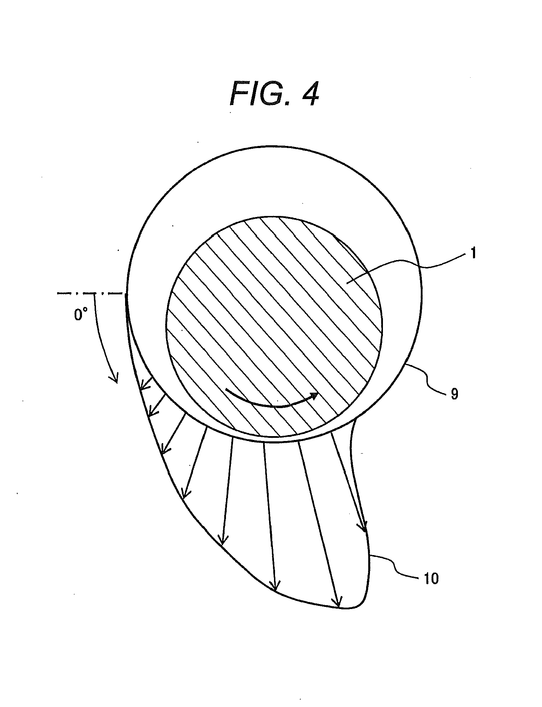

Fig. 4 is an explanatory view that explains a pressure oil film on a sliding surface of a general journal bearing device. When a side of the upstream side end portion of a lower bearing liner on a horizontal split plane of the bearing is set to 0 degree, the pressure oil film 10 becomes a maximum pressure on the rotary shaft-rotation-direction downstream side relative to 90 degrees, i.e., a perpendicular direction. In further downstream, the pressure is reduced, and a region at which any pressure does not generate is produced. The region at which the pressure does not generate varies according to the load of the rotary shaft 1 and operation conditions but is in a range of more than about 120 degrees.

As explained with reference to Fig. 4, on the sliding surface of the lower bearing liner, the portion of the sliding surface at which the oil film pressure generates, and the portion of the sliding surface at which the oil film pressure does not generate are generally produced. Therefore, in the embodiment shown in Fig. 2, an oil removing groove 7 is provided on the rotary shaft-rotation-direction downstream side of the sliding surface of the lower bearing liner relative to the portion of the sliding surface at which the oil film pressure generates, namely, the portion of the sliding surface on which the oil film pressure does not generate substantially. This oil removing groove 7 is a groove for discharging the lubricant oil, which flows on the sliding surface along the rotation direction of the rotary shaft 1, toward a side surface of the bearing.

Fig. 3 is a development view of the sliding surface of the lower bearing liner 2b shown in Fig. 2. In Fig. 3, a line A-A indicates a portion in a perpendicular direction and a line B-B indicates a boundary line of an oil film pressure producing portion in the rotary shaft-rotation-direction downstream side. Incidentally, in fact, the boundary of the pressure producing portion slightly varies circumferentially at respective positions of the lower bearing liner in a bearing width direction 20. Moreover, the oil film pressure producing portion itself is found by previously calculating/measuring it on the basis of various elements of the bearing device and rotary machine.

The oil removing groove 7 is arranged on the downstream side relative to the oil film pressure producing portion. The oil film pressure producing portion slightly varies in the circumferential direction, so that it is desirable that the oil removing groove 7 is arranged on the downstream side while obtaining flexibility to some extent. For example, as explained with reference to Fig. 4, the region at which the pressure does not generate is varied according to the load of the rotary shaft 1 and the operation conditions but is in the range of more than 120 degrees, so that the oil removing groove 7 is also arranged in the vicinity of a portion angularly spaced by 120 degrees, namely, in the vicinity of a portion angularly spaced from the perpendicular direction to the downstream side by an angle 30 degrees or slightly more.

Moreover, the oil removing groove 7 is a V-shaped groove, both bearing-width-direction end portions of which are arranged on the downstream side relative to a center portion of the groove, and which is composed of linear groove portions that extend toward bearing-width-direction side surfaces 21a, 21b from a center portion in the bearing width direction and are slanted toward the downstream side. By providing the groove that is formed in the V-shape that extends to the downstream sides of the both bearing side surfaces in the rotation direction from the center portion in the bearing width direction and communicates with the both bearing side surfaces, the lubricant oil that flows along the rotation direction is easy to be discharged onto the bearing side surfaces.

A part of a sliding surface 9b is circumferentially left on the downstream of the oil removing groove 7 of the lower bearing liner 2b.

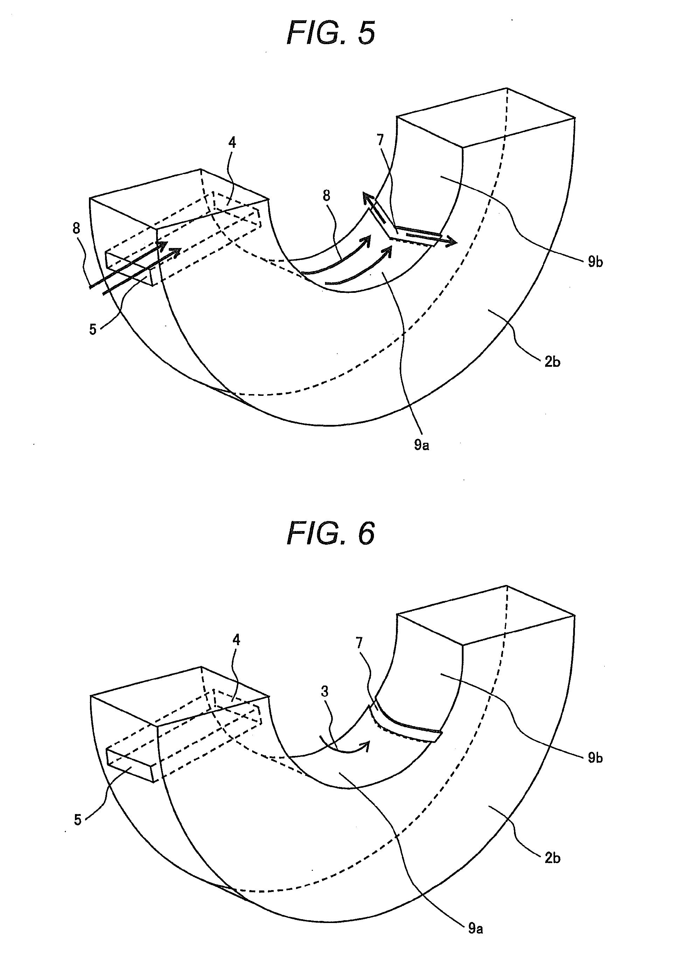

Fig. 5 is a view that shows a flow of the lubricant oil in the lower bearing liner 2b. The lubricant oil 8 supplied from the oil supply pathway 5 flows onto the sliding surface 9a from the oil supply hole 4. The flowing lubricant oil is accompaniedly moved to the downstream of the rotation direction by the rotation of the rotary shaft 1, lifts up the rotary shaft 1 and, thereafter, is almost discharged to an exterior of the bearing through the oil removing groove 7. A loss of the bearing is produced for a reason that the lubricant oil between the rotary shaft 1 and a sliding surface 9 is sheared by the rotation, so that it is possible to reduce the loss by discharging the lubricant oil in the rotation direction downstream of a portion, at which oil film reaction force lifting up the rotary shaft 1 is produced, to the bearing exterior.

By causing the oil removing groove 7 to be formed in the V-shape that extends to the downstream sides of the both bearing side surfaces in the rotation direction from the center portion in the bearing width direction and communicates with the both bearing side surfaces, the lubricant oil is made easy to be discharged to the bearing side surfaces. The oil removing groove 7 is provided at the portion which is located on the downstream side relative to the oil film pressure producing portion and at which the pressure is not produced substantially by the oil film, so that even if the oil removing groove 7 is provided, the performance of the bearing is not adversely affected. If the oil removing groove 7 is arranged as closer as possible with respect to a boundary in which the pressure of the oil film is not produced, it is possible to considerably reduce the loss.

In this structure, the sliding surface 9b is present on the downstream side of the oil removing groove 7 of the lower bearing liner 2b in the rotation direction. In a case where rotary vibration is produced due to a massive earthquake and damage of other portions, lubricant oil that cannot be discharged by the oil removing groove 7 and adheres to the rotary shaft 1 forms an oil film between the rotary shaft 1 and the sliding surface 9b on the downstream side of the oil removing groove 7 in the rotation direction, thus making it possible to obtain a damping effect. As a result, it is possible to reduce the rotary vibration of the rotary shaft 1. Therefore, according to this embodiment, it is possible to make low loss and high reliability compatible with each other.

Incidentally, in this embodiment, the oil removing groove 7 is formed in the V-shape but, as shown in Fig. 6, may be formed as a U-shaped groove, the both bearing-width-direction end portions of which are arranged on the rotary shaft-rotation-direction downstream side relative to the center portion of the groove and which is composed of curved groove portions that extend to the both bearing-side surfaces from the center portion in the bearing width direction.

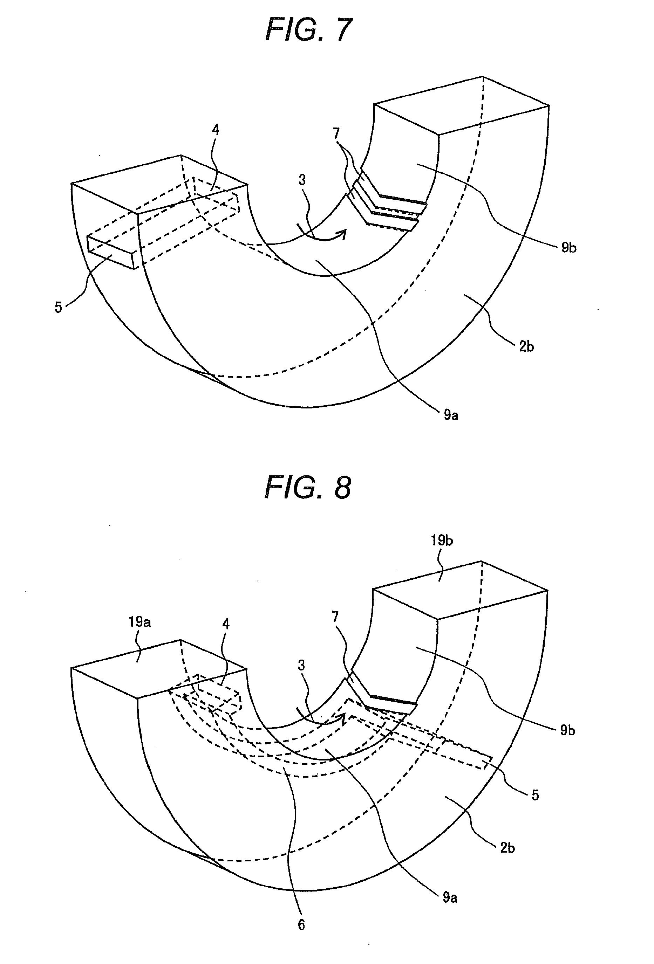

Moreover, in this embodiment, the single oil removing groove 7 is provided in the circumferential direction of the lower bearing liner 2b. However, if the oil removing groove is provided on the downstream side in the rotation direction relative to the oil filmpressure producing portion, a plurality of oil removing grooves may be provided in the circumferential direction of the lower bearing liner 2b. Fig. 7 is a view showing an example in which two oil removing grooves 7 are provided. By constructing in this way, it is possible to discharge a larger amount of lubricant oil and it can be expected to more reduce the loss.

### (Second Embodiment)

Next, a second embodiment of the present invention will be explained. Incidentally, elements similar to those of the first embodiment having been previously explained are denoted by like reference signs and the description of them will be omitted.

Fig. 8 is a perspective view of a lower bearing liner 2b of a journal bearing device 2 according to the second embodiment. This embodiment is characterized by an oil supply pathway for the lubricant oil that is provided in an interior of the bearing, in addition to the provision of the oil removing groove 7 in the sliding surface of the lower bearing liner 2b as provided in the first embodiment.

The low bearing liner 2b of this embodiment has an oil pathway 6 that circumferentially extends on an outer peripheral side of the sliding surface 9a on which the oil film pressure is produced. One of circumferential end portions of the oil pathway 6 which is located on the downstream side in the rotation direction extends to the vicinity of a lower portion of the oil removing groove 7. On the other hand, the other of the circumferential end portions of the oil pathway 6 which is located on the upstream side extends to a radial direction outer peripheral side position of the oil supply hole 4 in the vicinity of the upstream side end portion 19a, and extends to a radial direction inner peripheral side to communicate with the oil supply hole 4. Moreover, the oil supply pathway 5 communicates with a downstream side end portion of the oil pathway 6 in the rotary shaft rotation direction, and extends to a radial direction outer peripheral side from an end portion thereof to communicate with the outer peripheral surface of the lower bearing liner 2b. By configuring the oil supply pathway in the lower bearing liner 2b for the lubricant oil in this way, it is possible to maintain the lubricant oil, supplied from the exterior, in the lowest temperature state, and first supply it directly to the vicinity of a downstream side boundary of the oil pressure producing portion becoming the highest temperature in the lower bearing liner 2b.

It is common that, taking conformability and wear resistance into consideration, white metal that is a lowmelting point metal is used for the sliding surface 9 of the bearing. Temperature is increased as the sliding surface 9a gets close to the downstream side in the rotary shaft rotation direction, so that the supplied cold-lubricant-oil first passes under a portion that becomes the highest temperature, thus making it possible to suppress a reduction in the strength of the low melting point metal. If an oil quantity is reduced, the temperature of the sliding surface is increased, so that by cooling the highest heated portion, it is possible to realize a reduction in the oil quantity in addition to the reduction of the loss and the high reliability,

The journal bearing devices of the first and second embodiments explained above can be applied to industrial rotary machines, in which high reliability is required, such as generators, steam turbines, gas turbines, and compressors.

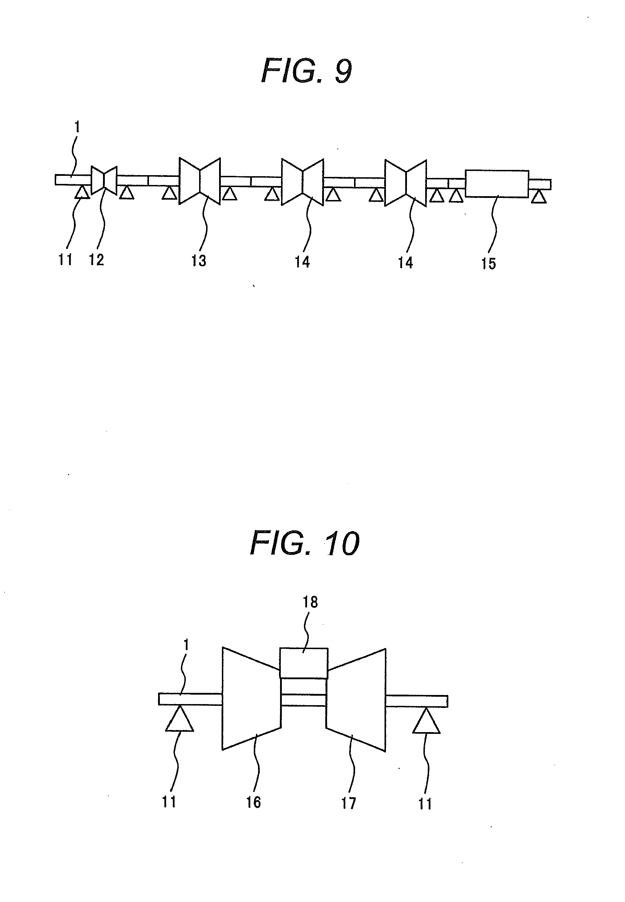

Fig. 9 is a view that schematically shows a steam turbine. It is common that, in a thermal power plant, multi-span type power plant which connect a high pressure turbine 12, an intermediate pressure turbine 13, a low pressure turbine 14, and a generator 15 are employed for high efficiency. It is desirable that the journal bearing devices according to the present invention are applied to all bearing devices 11. However, even if they are applied to some of the bearing devices 11, they can contribute to the reduction in the loss of the equipment.

Fig. 10 is a view that shows an example in which the bearing devices according to the present invention are employed in a gas turbine. The gas turbine includes a compressor 16 and a turbine 17, which are connected to each other by a rotary shaft 1, and a combustion device 18. If the bearing devices according to the present invention are employed as bearing devices 11 supporting the rotary shaft 1 of the gas turbine, it is possible to contribute to the reduction in the loss of the equipment.

Features, components and specific details of the structures of the above-described embodiments may be exchanged or combined to form further embodiments optimized for the respective application. As far as those modifications are apparent for an expert skilled in the art they shall be disclosed implicitly by the above description without specifying explicitly every possible combination.

### [Reference Signs List]

1...Rotary shaft
2...Journal bearing device
2a...Upper bearing liner
2b...Lower bearing liner
4...Oil supply hole
5...Oil supply pathway
6...Oil pathway
7...Oil removing groove
9a, 9b...Sliding surface

### [Citation List]

### [Patent Literature]

[Patent Literature 1] JP-A No. 2000-145781

## Claims

1. A journal bearing device for supporting a rotary shaft of a rotary machine, comprising:
an upper bearing liner (2a); and
a lower bearing liner (2b) connected to a lower part of the upper bearing liner (2a), and
wherein an oil removing groove (7) is provided in a sliding surface (9a, 9b) of the lower bearing liner (2b),
the oil removing groove (7) extends to both bearing side surfaces from a center portion in a bearing width direction,
the oil removing groove (7) is provided on a downstream side in a rotary shaft-rotation-direction relative to an oil film pressure producing portion of the sliding surface (9a, 9b) of the lower bearing liner (2b),
an end portion of the oil removing groove (7) in the bearing width direction is arranged on the rotation direction downstream side relative to a center portion of the groove in the bearing width direction, and
the journal bearing device (2) has the sliding surface on a downstream side of the oil removing groove of the lower bearing liner in the rotary shaft-rotation-direction.

2. The journal bearing device according to claim 1, wherein the oil removing groove (7) is arranged at a position which is located on the downstream side in the rotary shaft-rotation-direction and angularly spaced from a perpendicular direction by an angle of 30 degrees or more.

3. The journal bearing device according to claim 1 or 2,
wherein the oil removing groove (7) is a V-shaped groove that is composed of straight groove portions extending to the both bearing side surfaces from the center portion in the bearing width direction.

4. The journal bearing device according to claim 1 or 2,
wherein the oil removing groove (7) is a U-shaped groove that is composed of curved groove portions extending to the both bearing side surfaces from the center portion in the bearing width direction.

5. The journal bearing device according to at least one of claims 1 to 4, further comprising:
one or more oil pathways (6) circumferentially provided in the lower bearing liner (2b) below the sliding surface (9a, 9b);
an oil supply hole (4) communicating with an upstream side end portion of the oil pathway (6) in the rotary shaft-rotation-direction and opened in an upstream side end portion of the sliding surface of the low bearing liner in the rotary shaft-rotation-direction; and
an oil supply pathway (5) extending toward an inner peripheral side of the bearing from an outer peripheral surface of the low bearing liner (2b) and communicating with downstream side end portions of the one or more oil pathways (6) in the rotary shaft-rotation-direction, and
wherein the one or more oil pathway (6) extend to a part below the oil removing groove (7).

6. The journal bearing device according to at least one of claims 1 to 5,
wherein a plurality of oil removing grooves (7) are provided in the circumferential direction.

7. The journal bearing device according to claim 6,
wherein the oil removing grooves (7) are provided along a downstream side end portion of an oil pressure producing portion of the sliding surface (9a, 9b) of the lower bearing liner (2b) in rotary shaft-rotation-direction.

8. A rotary machine employing at least one journal bearing device (2) according to any one of claims 1 to 7.
